(19) Europäisches Patentamt
European Patent Office
Office européen des brevets

(11) **EP 4 363 888 B1**

(12) **EUROPEAN PATENT SPECIFICATION**

(45) Date of publication and mention
of the grant of the patent:
**15.04.2026   Bulletin 2026/16**

(51) International Patent Classification (IPC):
*G01S 7/497* (2006.01)     *G01S 7/48* (2006.01)
*G01S 7/495* (2006.01)     *G01S 17/42* (2006.01)
*G01S 17/89* (2020.01)     *G01S 17/10* (2020.01)
*G01S 7/481* (2006.01)

(21) Application number: **21954494.7**

(22) Date of filing: **24.08.2021**

(52) Cooperative Patent Classification (CPC):
**G01S 17/89; G01S 7/4808; G01S 7/495;
G01S 7/497; G01S 17/42;** G01S 7/4815;
G01S 17/10

(86) International application number:
**PCT/CN2021/114368**

(87) International publication number:
**WO 2023/023951 (02.03.2023 Gazette 2023/09)**

(54) **METHOD FOR DETECTING ANOMALIES OF LIDAR POINT CLOUD DATA AND RELATED DEVICE**

VERFAHREN ZUR ERKENNUNG VON ANOMALIEN VON LIDAR-PUNKTWOLKENDATEN UND ZUGEHÖRIGE VORRICHTUNG

PROCÉDÉ DE DÉTECTION D'ANOMALIES DE DONNÉES DE NUAGE DE POINTS LIDAR ET DISPOSITIF ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.05.2024   Bulletin 2024/19**

(73) Proprietor: **Shenzhen Yinwang Intelligent Technologies Co., Ltd.
Shenzhen City, Guangdong 518129 (CN)**

(72) Inventors:
• **REVADIGAR, Girish Shivalingappa**
  **Singapore 138588 (SG)**
• **WEI, Zhuo**
  **Singapore 138588 (SG)**
• **KANG, Suk In**
  **Singapore 138588 (SG)**
• **SEO, Kang Uk**
  **Seoul 02841 (KR)**
• **LEE, Hwejae**
  **Seoul 02841 (KR)**
• **KWAK, Byung IL**
  **Seoul 02841 (KR)**
• **KIM, Huy Kang**
  **Seoul 02841 (KR)**
• **JEONG, Seonghoon**
  **Seoul 02841 (KR)**

(74) Representative: **Gill Jennings & Every LLP
The Broadgate Tower
20 Primrose Street
London EC2A 2ES (GB)**

(56) References cited:
WO-A1-2021/088313        CN-A- 108 226 894
CN-A- 109 285 188        CN-A- 109 375 228
CN-A- 110 007 315        US-A1- 2021 003 711
US-A1- 2022 268 904

## Description

### TECHNICAL FIELD

Embodiments of the present invention relate to the field of information technologies, and more specifically, to a method for method for detecting anomalies of LiDAR point cloud data and a related device.

### BACKGROUND

Light detection and ranging (LiDAR) systems are used in mapping, surveying and object detection among other uses. LIDAR has many applications including in robotics, navigation, autonomous driving, or other similar applications. LIDAR systems emit laser light and detect reflections in the emitted laser light. By measuring the time-of-flight (TOF) between the emission of the laser light and detection of the reflected laser light, a distance between the LIDAR unit and the object which reflected the laser light may be calculated.

However, the LiDAR has vulnerabilities that could be performable physically due to the technologies' characteristics. The LiDAR shoots and receives the laser light from the LiDAR to surrounding objects. In further detail, the specific objects reflect the laser light signal from the LiDAR, and the laser light signal returns to the receiver in the LiDAR. This principle about the LiDAR's distance measurement could be applied to vulnerabilities by the attackers. The LiDAR receives the replicated laser light signal even though it is an attack of the laser light signal due to the no consideration of the attack threats. As a result, the attacked LiDAR point cloud data via the attack can cause false recognition for the surrounding objects. In the other threat, the attack models were proposed not to trust the machine learning model and deep learning model for object detection by generating an adversarial object from the point cloud in the LiDAR. These vulnerabilities and attack models are critical threats to the safety of drivers and pedestrians in autonomous driving. The anomaly detection and intrusion detection method for the LiDAR is needed to improve autonomous driving's security and safety. WO 2021/088313 A1 discusses a state detection device applicable to a laser radar, the state detection device comprising: a fault diagnosis unit used to perform a fault diagnosis of components of a laser radar and to output a fault diagnostic signal when a fault is diagnosed.

### SUMMARY

Embodiments of this application provide a method for detecting anomalies of LiDAR point cloud data and related device. The technical solution can detect the anomaly point efficiently.

According to a first aspect, an embodiment of this application provides a method for detecting anomalies of LiDAR point cloud data according to appended claim 1.

It is very difficult for the attacker to know all the specifications of LiDAR and calculating all points in real time. Therefore, the above-mentioned technical solution can detect the anomaly point efficiently. Further, the above-mentioned technical solution can be a suitable intrusion detection system when used in a limited volume of vehicles, because it has less computational complexity than the detection methods that compares with other sensor (e.g., camera, GPS) output.

The obtaining a first position information, includes: determining the first position information of the target data point according to a coordinate of the target data point in the Cartesian coordinate system, wherein the first position information comprising an azimuth angle of the target data point and a vertical angle of the target data point.

The specifications of the LiDAR sensor include: a horizontal angular resolution, a firing interval, number of channels of the LiDAR sensor, a vertical angle for each channel, and a horizontal angle offset for each channel; the determining a second position information corresponding to the target data point according to specifications of a LiDAR sensor, includes: determining a plurality of pieces of position information according to the specifications of the LiDAR sensor, wherein each piece of the position information corresponding to a data point, and the each piece of the position information comprising a azimuth angle of a corresponding data point and a vertical angle of the corresponding data point; determining the second position information from the plurality of pieces of position information according to the first position information, wherein a difference between an azimuth angle included in the second position information and an azimuth angle included in the first position information is smaller than a difference between an azimuth angle included in any piece of position information other than the second position information among the plurality of pieces of position information and the azimuth angle included in the first position information, a difference between a vertical angle included in the second position information and a vertical angle included in the first position information is smaller than a difference between a vertical angle included in any piece of position information other than the second position information among the plurality of pieces of position information and the vertical angle included in the first position information.

In a possible design, the determining the target data point is an anomaly point or a normal point according to the first position information and the second position information, includes: determining an anomaly score according to the first position information and the second position information; determining the target data point is the anomaly point or the normal point according to the anomaly score.

In a possible design, the determining an anomaly score according to the first position information and the second position information, includes: determining the anomaly score according to a following formula: $S_{anom} = |\alpha - \alpha_{near}| + |\omega - \omega_{near}|$, $S_{anom}$ is the anomaly score, $\alpha$ is the azimuth angle included in the first position information, $\alpha_{near}$ is the azimuth angle included in the second position information, $\omega$ is the vertical angle included in the first position information, and $\omega_{near}$ is the vertical angle included in the second position information.

In a possible design, the determining the target data point is the anomaly point or the normal point according to the anomaly score, includes: determining the target data point is the anomaly point when the anomaly score is greater or equals to a preset threshold; determining the target data point is the normal point when the anomaly score is smaller than the preset threshold.

According to a second aspect, an embodiment of this application provides an electronic device according to appended claim 7.

According to a third aspect, an embodiment of this application provides a computer readable storage medium according to appended claim 13.

According to a comparative example, an electronic device is provided, including a processor and a memory. The processor is connected to the memory. The memory is configured to store instructions, the processor is configured to execute the instructions. When the processor executes the instructions stored in the memory, the processor is enabled to perform the method in the first aspect or any possible implementation of the first aspect.

According to another comparative example, a chip system is provided, where the chip systems includes a memory and a processor, wherein the memory is configured to store a computer program, and the processor is configured to invoke the computer program from the memory and run the computer program, so that a server on which the chip is disposed performs the method in the first aspect or any possible implementation of the first aspect.

According to a fourth aspect, a computer program product according to appended claim 14 is provided.

## DESCRIPTION OF DRAWINGS

FIG.1 is a schematic block diagram of a LiDAR scanning system.

FIG.2 is a schematic block diagram of a LiDAR scanning system to an embodiment of the present application.

FIG. 3 is a flowchart of an embodiment of a method for detecting anomalies of LiDAR point cloud data.

FIG. 4 is a schematic block diagram of an electronic device 400 according to an embodiment of this application.

FIG. 5 is a schematic block diagram of an electronic device 500 according to an embodiment of this application.

## DESCRIPTION OF EMBODIMENTS

The following describes the technical solutions in this application with reference to the accompanying drawings.

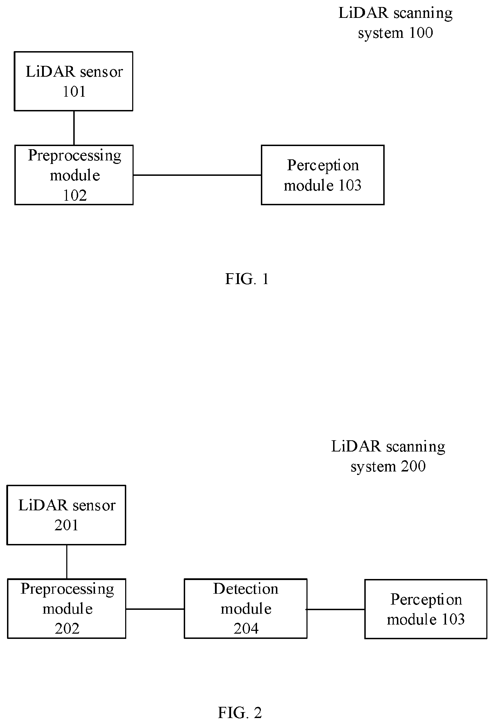

FIG.1 is a schematic block diagram of a LiDAR scanning system.

As shown in FIG. 1, The LiDAR scanning system 100 may include at least one LiDAR sensor 101, a preprocessing module 102, and a perception module 103.

The LiDAR scanning system may be coupled to a host system. The host system may include, but is not limited to, a three dimensional object scanner, a vehicle control system used for automated parking assistance, automated driver assistance (e.g., blind spot and collision avoidance), semi or fully autonomous driving, a robotic navigation system, a security camera, a monitoring or surveillance system, a sensor network for monitoring or surveillance of an area of the environment.

The LiDAR sensor 101 may include a laser source and a detector subsystem comprising one or more detectors, such as one more avalanche photodiodes (APDs), charge-coupled device (CCD) sensors, complementary metal-oxide-semiconductor (CMOS) sensors, or micro-electro-mechanical systems (MEMS) sensors.

The laser source, comprising one or more laser emitters, is configured to generate and transmit laser light, such as a laser beam. The laser source may generate Gaussian beams. The laser source may transmit pulsed laser light (e.g., pulsed beams). The laser source typically emits infrared (IR), such as near infrared (NIR) light, but may emit one or more types of visible light and/or or possibly ultraviolet (UV) light in addition to, or instead of, infrared light. The laser source may comprise a plurality of laser emitters, each laser emitter being configured to transmit a different type of light. In one example, each laser emitter in the plurality of laser emitter is configured to transmit a respective one of infrared light or one or more type of visible light. In one example, the plurality of laser emitters comprises an infrared laser emitter configured to transmit infrared light, a blue laser emitter configured to transmit blue light, a red laser emitter configured to transmit a red light, and a green laser emitter configured to transmit a green light. These laser lights may be controlled to send laser beams simultaneously or non-concurrently.

Those skilled in the art will understand that other light sources, such as an LED, may be adapted to substitute for a laser source. However, such a substitution must account for the system requirements, and may be accompanied by additional modification e.g. collimation, to meet requirements.

The detector subsystem detects reflected laser light using the one or more detectors, generates and outputs a raw data signal corresponding to the received laser light that is sent to the preprocessing module 102.

The LiDAR sensor may be a single channel LiDAR sensor or a multiple channel LiDAR sensor.

The preprocessing module 102 may be configured to receive the raw data signal from the LiDAR sensor 101. The raw data signal may include a distance between each point to the LiDAR sensor 101 and an azimuth angle of the each point. The preprocessing module may be further configured to convert the raw data signal into a LiDAR point cloud data, which is a (x, y, z) format. The x, y, z values are the projection of the polar coordinate on the Cartesian coordinate system. P The preprocessing module 102 forwards the LiDAR point cloud data to the perception module 103.

The perception module 103 may be configured to determine a distance from the LIDAR scanning system 100 to one or more objects in the environment of the LIDAR scanning system 100, and/or determine where and what kinds of the objects.

According to the LiDAR scanning system 100 shown in FIG. 1, an attacker may reside between the preprocessing module 102 and the perception module 103 to impersonate himself as preprocessing module to modify the LiDAR point cloud data.

FIG.2 is a schematic block diagram of a LiDAR scanning system to an embodiment of the present application.

Compared with the LIDAR scanning system 100 shown in FIG. 1, the LiDAR scanning system 200 shown in FIG. 2 adds a detection module 204.

The function of the LiDAR sensor 202 is similar to the function of the LiDAR sensor 101. The function of the preprocessing module 202 is similar to the function of the preprocessing module 102, except that the preprocessing module 202 forwards the LiDAR point cloud data to the detection module 204 instead of the perception module 203. The detection module 204 may be configured to receive the LiDAR point cloud data from the preprocessing module 202, determine a point in the LiDAR point cloud data is a normal point or an anomaly point and forward the normal point to the perception module 203. The perception module 203 may be configured to determine a distance from the LiDAR scanning system 200 to one or more objects in the environment of the LiDAR scanning system 200, and/or determine where and what kinds of the objects.

The detection module 204 can be used to detect whether a point in the LiDAR point cloud data has been tampered with or injected by an attacker. In another word, if a point in the LiDAR point cloud data is not determined according to the raw data signal obtained by the LiDAR sensor 201 (that is the anomaly point), the detection module 204 may identify it. This ensures that all the points in the LiDAR point cloud data received by the perception module 203 are determined according to the raw data signal obtained by the LiDAR sensor (that is the normal point).

Optionally, the detection module 204 may be located inside the trust boundary of the perception module 203. This may be further ensure the security of the LiDAR scanning system.

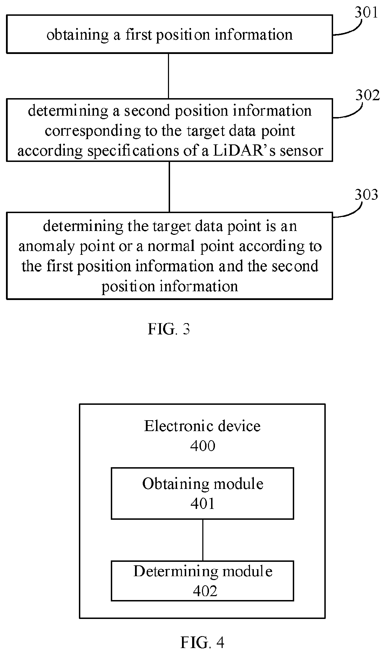

The functions of the detection module 204 are described below in conjunction with FIG. 3.

FIG. 3 is a flowchart of an embodiment of a method for detecting anomalies of LiDAR point cloud data. The method shown in FIG. 3 may be performed by the detection module 204.

301, obtaining a first position information, wherein the first position information indicating a position of a target data point in the LiDAR point cloud data.

302, determining a second position information corresponding to the target data point according specifications of a LiDAR's sensor.

303, determining the target data point is an anomaly point or a normal point according to the first position information and the second position information.

The target data point is any one of the point in the LiDAR point cloud data.

Optionally, in some embodiments, the first position information may include an azimuth angle of the target data point and a vertical angle of the target data point.

As mentioned in above, the detection module 204 receives the LiDAR point cloud data from the preprocessing module 202. The preprocessing module 202 converts the raw data signal into a LiDAR point cloud data, which is a (x, y, z) format. In another word, when the detection module 204 receives the LiDAR point cloud data, the detection module 204 obtains the coordinate of the target data point in the Cartesian coordinate system. The first position information may be obtained according to the following formulas:

$$R = \sqrt{x^2 + y^2 + z^2} \text{ , (formula 1.1)}$$

$$\omega = a\cos\left(\frac{\sqrt{x^2 + y^2}}{R}\right), \text{(formula 1.2)}$$

$$\alpha + \delta = a\cos\left(\frac{y}{\sqrt{x^2 + y^2}}\right), \text{(formula 1.3)}$$

(x, y, z) is the coordinate of the target data point in the Cartesian coordinate system, $\omega$ is the vertical angle of the target data point, $\alpha$ is the azimuth angle of the target data point, and $\delta$ is a horizontal angle offset which is pre-defined constant value. $\alpha + \delta$ is the horizontal angle of the target data point. In another word, according to the formulas 1.1-1.3, the vertical angle and the horizontal angle of the target data point may be obtained, and the azimuth angle of the target data point may be obtained according to the horizontal angel of the target data point and the pre-defined horizontal angel offset.

Optionally, in some embodiments, the determining a second position information corresponding to the target data point according to specifications of a LiDAR sensor, includes: determining a plurality of pieces of position information according to specifications of the LiDAR sensor, wherein each piece of the position information corresponding to a data point, and the each piece of the position information comprising a azimuth angle of a corresponding data point and a vertical angle of the corresponding data point; determining the second position information from the plurality of pieces of position information according to the first position information, wherein a difference between an azimuth angle included in the second position information and an azimuth angle included in the first position information is smaller than a difference between an azimuth angle included in any piece of position information other than the second position information among the plurality of pieces of position information and the azimuth angle included in the first position information, a difference between a vertical angle included in the second position information and a vertical angle included in the first position information is smaller than a difference between a vertical angle included in any piece of position information other than the second position information among the plurality of pieces of position information and the vertical angle included in the first position information.

The specifications of the LiDAR sensor include: a horizontal angular resolution, a firing interval, number of channels of the LiDAR sensor, a vertical angle for each channel, and a horizontal angle offset for each channel.

The horizontal angulation resolution, the firing interval and the number of channels of the LiDAR sensor determines the number of possible pairs of horizontal angle and vertical angle. Possible values of azimuth angle for each frame may be determined according to the horizontal angulation resolution and the firing interval. In detail, the quotient of the horizontal angulation resolution and the firing interval is the possible values of the azimuth angle for each fame. If the quotient of the horizontal angulation resolution and the firing interval is not an integer, the quotient may be floored/ceiled/rounded to obtain the possible values. For each azimuth angle, the number of channels of the LiDAR sensor is the number of possible pairs of horizontal angle and vertical angle. The value of the vertical angle in each horizontal-vertical angle pair may be determined according to the vertical angle of the corresponding channel. The value of the horizontal angle in the each horizontal-vertical angle pair may be determined according to the horizontal angular resolution, and the value of an azimuth angle corresponding to the each horizontal-vertical angle pair may be determined according to the horizontal angel in the each horizontal-vertical angle pair and the horizontal angle offset of the corresponding channel. For example, the azimuth angle may be determined according to the following formula:

$$\delta_i = \varphi_i - \delta_j \text{ (formula 1.4)}$$

$\varphi_i$ is the horizontal angle in the $i^{th}$ horizontal-vertical angle pair in a frame, the $i^{th}$ horizontal-vertical angle pair corresponds to the $j^{th}$ channel of the LiDAR sensor, $\delta_j$ is the horizontal angle offset of the $j^{th}$ channel, $\alpha_i$ is the azimuth angle corresponding to the $i^{th}$ horizontal-vertical angle pair.

It is assume that there is a single return mode 32 channel LiDAR sensor with firing interval of 55.52 microsecond and 10Hz horizontal angular resolution. There are roughly 1801 (=10Hz / 55.52 microsecond) possible values of azimuth angle for each frame. For each azimuth angle, there are 32 possible pairs of the horizontal angle and the vertical angle. The 32 possible pairs of the horizontal angle and the vertical angle are in one-to-one correspondence with the 32 channels of the LiDAR sensor. There are 1801 *32 horizontal-vertical angle pairs for each frame. Consequently, there are 1801*32 pieces of position information. The 1801*32 pieces of position information are in one-to-one correspondence with the 1801*32 horizontal-vertical angle pairs. Each position information includes the azimuth angle and the vertical angle of the corresponding horizontal-vertical angle pair, wherein the azimuth angle of the corresponding horizontal-vertical angle pair may be determined according to the formula 1.4. The second position information is one of the 1801*32 pieces of position information. The process of finding the second position in the 1801*32 pieces of position information may be performed quickly through binary search or parallel operations.

Optionally, in some embodiments, the determining the target data point is an anomaly point or a normal point according to the first position information and the second position information, includes: determining an anomaly score according to the first position information and the second position information; determining the target data point is the anomaly point or the normal point according to the anomaly score.

Optionally, in some embodiments, the determining an anomaly score according to the first position information and the second position information, includes: determining the anomaly score according to a following formula:

$$S_{anom} = \left| \alpha - \alpha_{near} \right| + \left| \omega - \omega_{near} \right|, \text{(formula 1.5)}$$

$S_{anom}$ is the anomaly score, $\alpha$ is the azimuth angle included in the first position information, $\alpha_{near}$ is the azimuth angle included in the second position information, $\omega$ is the vertical angel included in the first position information, and $\omega_{near}$ is the vertical angel included in the second position information.

Optionally, in some embodiments, the determining an anomaly score according to the first position information and the second position information, includes: determining the anomaly score according to a following formula:

$$S_{anom} = \left| \frac{\alpha}{\alpha_{near}} \right| + \left| \frac{\omega}{\omega_{near}} \right|, \text{(formula 1.6)}$$

$S_{anom}$ is the anomaly score, $\alpha$ is the azimuth angle included in the first position information, $\alpha_{near}$ is the azimuth angle included in the second position information, $\omega$ is the vertical angel included in the first position information, and $\omega_{near}$ is the vertical angel included in the second position information.

Optionally, in some embodiments, the determining an anomaly score according to the first position information and the second position information, includes: determining the anomaly score according to a following formula:

$$S_{anom} = \left| \alpha - \alpha_{near} \right|, \text{(formula 1.7)}$$

$S_{anom}$ is the anomaly score, $\alpha$ is the azimuth angle included in the first position information, $\alpha_{near}$ is the azimuth angle included in the second position information. Under this condition, the first position information may merely include the azimuth angle of the target data point. Correspondingly, the second position information may be the piece of the position information which includes the closest azimuth angle to the target data point.

Optionally, in some embodiments, the determining the target data point is the anomaly point or the normal point according to the anomaly score, includes: determining the target data point is the anomaly point when the anomaly score is greater or equals to a preset threshold; determining the target data point is the normal point when the anomaly score is smaller than the preset threshold.

In addition, if the target data point is the normal point, the target data point may be forward to the perception module 203. If the target data point is the anomaly point, the target data point may be discarded.

It is very difficult for the attacker to know all the specifications of LiDAR and calculating all points in real time. The present application can detect attacks without delay by performing relatively low computing operations. Meanwhile, the present application can be used with other intrusion detection systems located at after the perception module, so it can increase higher detection rate. Further, the present application can be a suitable intrusion detection system when used in a limited volume of vehicles, because it has less computational complexity than the detection methods that compares with other sensor (e.g., camera, GPS) output.

Optionally, the detection module which is used to perform the method shown in FIG. 3 may be located inside the trust boundary of the perception module to detect this type of attacks.

FIG. 4 is a schematic block diagram of an electronic device 400 according to an embodiment of this application. As shown in FIG.4, the electronic device 400 includes: an obtaining module 401 and a determining module 402.

The obtaining module 401 is configured to obtain a first position information, wherein the first position information indicating a position of a target data point in LiDAR point cloud data.

The determining module 402 is configured to determine a second position information corresponding to the target data point according specifications of a LiDAR sensor.

The determining module 402 , further configured to determine the target data point is an anomaly point or a normal point according to the first position information and the second position information.

Optionally, the obtaining module 401 is specifically configured to determine the first position information of the target data point according to a coordinate of the target data point in the Cartesian coordinate system, wherein the first position information comprising an azimuth angle of the target data point and a vertical angle of the target data point.

Optionally, the specifications of the LiDAR sensor comprise: a horizontal angular resolution, a firing interval, number of channels of the LiDAR sensor, a vertical angle for each channel, and a horizontal angle offset for each channel; the determining module 402 is specifically configured to: determine a plurality of pieces of position information according to the specifications of the LiDAR sensor, wherein each piece of the position information corresponding to a data point, and the each piece of the position information comprising a azimuth angle of a corresponding data point and a vertical angle of the corresponding data point; determine the second position information from the plurality of pieces of position information according to the first position information, wherein a difference between an azimuth angle included in the second position information and an azimuth angle included in the first position information is smaller than a difference between an azimuth angle included in any piece of position information other than the second position information among the plurality of pieces of position information and the azimuth angle included in the first position information, a difference between a vertical angle included in the second position information and a vertical angle included in the first position information is smaller than a difference between a vertical angle included in any piece of position information other than the second position information among the plurality of pieces of position information and the vertical angle included in the first position information.

Optionally, the determining module 402 is specifically configured to: determine an anomaly score according to the first position information and the second position information; determine the target data point is the anomaly point or the normal point according to the anomaly score.

Optionally, the determining module 402 is specifically configured to determine the anomaly score according to a following formula:

$$ S_{anom} = \left| \alpha - \alpha_{near} \right| + \left| \omega - \omega_{near} \right| $$

$S_{anom}$ is the anomaly score, $\alpha$ is the azimuth angle included in the first position information, $\alpha_{near}$ is the azimuth angle included in the second position information, $\omega$ is the vertical angle included in the first position information, and $\omega_{near}$ is the vertical angle included in the second position information.

Optionally, the determining module 402 is specifically configured to: determine the target data point is the anomaly point when the anomaly score is greater or equals to a preset threshold; determine the target data point is the normal point when the anomaly score is smaller than the preset threshold.

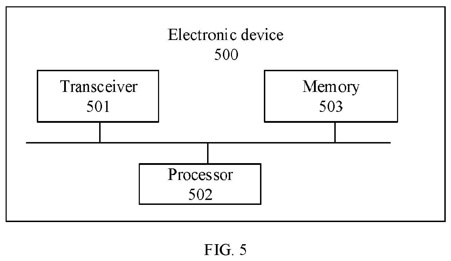

FIG. 5 is a schematic block diagram of an electronic device 500 according to an embodiment of this application.

As shown in FIG. 5, the electronic device 500 may include a transceiver 501, a processor 502, and a memory 503. The memory 503 may be configured to store code, instructions, and the like executed by the processor 502.

It should be understood that the processor 502 may be an integrated circuit chip and has a signal processing capability. In an implementation process, steps of the foregoing method embodiments may be completed by using a hardware integrated logic circuit in the processor, or by using instructions in a form of software. The processor may be a general purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or transistor logic device, or a discrete hardware component. The processor may implement or perform the methods, the steps, and the logical block diagrams that are disclosed in the embodiments of the present invention. The general purpose processor may be a microprocessor, or the processor may be any conventional processor or the like. The steps of the methods disclosed with reference to the embodiments of the present invention may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing methods in combination with hardware in the processor.

It may be understood that the memory 503 in the embodiments of the present invention may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM) and is used as an external cache. By way of example rather than limitation, many forms of RAMs may be used, and are, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchronous link DRAM, SLDRAM), and a direct rambus random access memory (Direct Rambus RAM, DR RAM).

It should be noted that the memory in the systems and the methods described in this specification includes but is not limited to these memories and a memory of any other appropriate type.

An embodiment of this application further provides a system chip, where the system chip includes an input/output interface, at least one processor, at least one memory, and a bus. The at least one memory is configured to store instructions, and the at least one processor is configured to invoke the instructions of the at least one memory to perform operations in the methods in the foregoing embodiments.

An embodiment of this application further provides a computer storage medium, where the computer storage medium may store a program instruction for performing any of the foregoing methods.

Optionally, the storage medium may be specifically the memory 503.

A person of ordinary skill in the art may be aware that, in combination with the examples described in the embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be or may not be physically separate, and parts displayed as units may be or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in a form of a software functional unit and sold or used as an independent product, the functions may be stored in a computer readable storage medium. Based on such an understanding, the technical solutions in this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

## Claims

1. A method for detecting anomalies of LiDAR point cloud data, the method comprising:

   obtaining a first position information (301), wherein the first position information indicating a position of a target data point in the LiDAR point cloud data, wherein the obtaining a first position information, comprises:
   determining the first position information of the target data point according to a coordinate of the target data point in the Cartesian coordinate system, wherein the first position information comprising an azimuth angle of the target data point and a vertical angle of the target data point;

determining a second position information corresponding to the target data point according specifications of a LiDAR sensor (302), wherein the specifications of the LiDAR sensor comprise: a horizontal angular resolution, a firing interval, number of channels of the LiDAR sensor, a vertical angle for each channel, and a horizontal angle offset for each channel, and the determining a second position information corresponding to the target data point according to specifications of a LiDAR sensor, comprises:

determining a plurality of pieces of position information according to the specifications of the LiDAR sensor, wherein each piece of the position information corresponds to a data point, and each piece of the position information comprises an azimuth angle of a corresponding data point and a vertical angle of the corresponding data point; wherein
the plurality of pieces of position information are in a one-to-one correspondence with the possible data points that can be measured by the LiDAR sensor;
determining the second position information from the plurality of pieces of position information according to the first position information, wherein a difference between an azimuth angle comprised in the second position information and an azimuth angle comprised in the first position information is smaller than a difference between an azimuth angle comprised in any piece of position information other than the second position information among the plurality of pieces of position information and the azimuth angle comprised in the first position information, a difference between a vertical angle comprised in the second position information and a vertical angle comprised in the first position information is smaller than a difference between a vertical angle comprised in any piece of position information other than the second position information among the plurality of pieces of position information and the vertical angle comprised in the first position information; and
determining the target data point is an anomaly point or a normal point according to the first position information and the second position information (303), wherein an anomaly point is a point in the LiDAR point cloud data that has been tampered with or injected by an attacker.

2. The method according to claim 1, wherein the determining the target data point is an anomaly point or a normal point according to the first position information and the second position information, comprises:

determining an anomaly score according to the first position information and the second position information;
determining the target data point is the anomaly point or the normal point according to the anomaly score.

3. The method according to claim 2, wherein the determining an anomaly score according to the first position information and the second position information, comprises:

determining the anomaly score according to the following formula:

$$S_{anom} = \left| \alpha - \alpha_{near} \right| + \left| \omega - \omega_{near} \right|$$

$S_{anom}$ is the anomaly score, $\alpha$ is the azimuth angle comprised in the first position information, $\alpha_{near}$ is the azimuth angle comprised in the second position information, $\omega$ is the vertical angle comprised in the first position information, and $\omega_{near}$ is the vertical angle comprised in the second position information.

4. The method according to claim 2, wherein the determining an anomaly score according to the first position information and the second position information, comprises:

determining the anomaly score according to the following formula:

$$S_{anom} = \left| \frac{\alpha}{\alpha_{near}} \right| + \left| \frac{\omega}{\omega_{near}} \right|$$

$S_{anom}$ is the anomaly score, $\alpha$ is the azimuth angle comprised in the first position information, $\alpha_{near}$ is the azimuth angle comprised in the second position information, $\omega$ is the vertical angle comprised in the first position information, and $\omega_{near}$ is the vertical angle comprised in the second position information.

5. The method according to claim 2, wherein the determining an anomaly score according to the first position information and the second position information, comprises:

determining the anomaly score according to the following formula:

$$S_{anom} = \left| \alpha - \alpha_{near} \right|$$

$S_{anom}$ is the anomaly score, $\alpha$ is the azimuth angle included in the first position information, $\alpha_{near}$ is the azimuth angle included in the second position information.

6. The method according to any of claims 2 to 5, wherein the determining the target data point is the anomaly point or the normal point according to the anomaly score, comprises:

determining the target data point is the anomaly point when the anomaly score is greater or equals to a preset threshold;
determining the target data point is the normal point when the anomaly score is smaller than the preset threshold.

7. An electronic device (400), the electronic device comprising:

an obtaining module (401), configured to obtain a first position information, wherein the first position information indicating a position of a target data point in LiDAR point cloud data, wherein the obtaining module is specifically configured to determine the first position information of the target data point according to a coordinate of the target data point in the Cartesian coordinate system, wherein the first position information comprising an azimuth angle of the target data point and a vertical angle of the target data point;
a determining module (402), configured to determine a second position information corresponding to the target data point according specifications of a LiDAR sensor, wherein the specifications of the LiDAR sensor comprise a horizontal angular resolution, a firing interval, number of channels of the LiDAR sensor, a vertical angle for each channel, and a horizontal angle offset for each channel; the determining module is further configured to:

determine a plurality of pieces of position information according to the specifications of the LiDAR sensor, wherein each piece of the position information corresponding to a data point, and the each piece of the position information comprising a azimuth angle of a corresponding data point and a vertical angle of the corresponding data point; wherein
the plurality of pieces of position information are in a one-to-one correspondence with the possible data points that can be measured by the LiDAR sensor;
determine the second position information from the plurality of pieces of position information according to the first position information, wherein a difference between an azimuth angle comprised in the second position information and an azimuth angle comprised in the first position information is smaller than a difference between an azimuth angle comprised in any piece of position information other than the second position information among the plurality of pieces of position information and the azimuth angle comprised in the first position information, a difference between a vertical angle comprised in the second position information and a vertical angle comprised in the first position information is smaller than a difference between a vertical angle comprised in any piece of position information other than the second position information among the plurality of pieces of position information and the vertical angle comprised in the first position information;

the determining module is further configured to determine the target data point is an anomaly point or a normal point according to the first position information and the second position information, wherein an anomaly point is a point in the LiDAR point cloud data that has been tampered with or injected by an attacker.

8. The electronic device according to claim 7, wherein the determining module is specifically configured to:

determine an anomaly score according to the first position information and the second position information;
determine the target data point is the anomaly point or the normal point according to the anomaly score

9. The electronic device according to claim 8, wherein the determining module is specifically configured to determine the anomaly score according to a following formula:

$$S_{anom} = \left|\alpha - \alpha_{near}\right| + \left|\omega - \omega_{near}\right|$$

$S_{anom}$ is the anomaly score, $\alpha$ is the azimuth angle comprised in the first position information, $\alpha_{near}$ is the azimuth angle comprised in the second position information, $\omega$ is the vertical angle comprised in the first position information, and $\omega_{near}$ is the vertical angle comprised in the second position information.

10. The electronic device according to claim 8, wherein the determining module is specifically configured to determine the anomaly score according to the following formula:

$$S_{anom} = \left|\frac{\alpha}{\alpha_{near}}\right| + \left|\frac{\omega}{\omega_{near}}\right|$$

$S_{anom}$ is the anomaly score, $\alpha$ is the azimuth angle comprised in the first position information, $\alpha_{near}$ is the azimuth angle comprised in the second position information, $\omega$ is the vertical angle comprised in the first position information, and $\omega_{near}$ is the vertical angle comprised in the second position information.

11. The electronic device according to claim 8, wherein the determining module is specifically configured to determine the anomaly score according to the following formula:

$$S_{anom} = \left|\alpha - \alpha_{near}\right|$$

$S_{anom}$ is the anomaly score, $\alpha$ is the azimuth angle included in the first position information, $\alpha_{near}$ is the azimuth angle included in the second position information.

12. The electronic device according to any of claims 7 to 11, wherein the determining module is specifically configured to:

determine the target data point is the anomaly point when the anomaly score is greater or equals to a preset threshold;
determine the target data point is the normal point when the anomaly score is smaller than the preset threshold.

13. A computer readable storage medium, wherein the computer readable storage medium stores instructions, and when the instructions run on an electronic device (400) according to claim 7, the electronic device (400) is enabled to perform the method according to any one of claims 1 to 6.

14. A computer program product, wherein when the computer program product runs on an electronic device (400) according to claim 7, the electronic device (400) is enabled to perform the method according to any one of claims 1 to 6.

**Patentansprüche**

1. Verfahren zum Erkennen von Anomalien von LiDAR-Punktwolkendaten, wobei das Verfahren Folgendes umfasst: Erlangen erster Positionsinformationen (301), wobei die ersten Positionsinformationen eine Position eines Zieldatenpunkts in den LiDAR-Punktwolkendaten angeben, wobei das Erlangen erster Positionsinformationen Folgendes umfasst:

Bestimmen der ersten Positionsinformationen des Zieldatenpunkts gemäß einer Koordinate des Zieldatenpunkts in dem kartesischen Koordinatensystem, wobei die ersten Positionsinformationen einen Azimutwinkel des Zieldatenpunkts und einen Vertikalwinkel des Zieldatenpunkts umfassen;
Bestimmen von zweiten Positionsinformationen, die dem Zieldatenpunkt gemäß den Spezifikationen eines LiDAR-Sensors (302) entsprechen, wobei die Spezifikationen des LiDAR-Sensors Folgendes umfassen: eine Horizontalwinkelauflösung, ein Aussendeintervall, eine Anzahl von Kanälen des LiDAR-Sensors, einen Vertikalwinkel für jeden Kanal und einen Horizontalwinkelversatz für jeden Kanal, und das Bestimmen von zweiten Positionsinformationen, die dem Zieldatenpunkt gemäß den Spezifikationen eines LiDAR-Sensors entsprechen, Folgendes umfasst:

Bestimmen einer Vielzahl von Positionsinformationen gemäß den Spezifikationen des LiDAR-Sensors, wobei jede Positionsinformation einem Datenpunkt entspricht und jede Positionsinformation einen Azimutwinkel eines entsprechenden Datenpunkts und einen Vertikalwinkel des entsprechenden Datenpunkts umfasst; wobei

die Vielzahl von Positionsinformationen in einer Eins-zu-Eins-Entsprechung mit den möglichen Datenpunkten steht, die durch den LiDAR-Sensor gemessen werden können;

Bestimmen von zweiten Positionsinformationen aus der Vielzahl von Positionsinformationen gemäß den ersten Positionsinformationen, wobei eine Differenz zwischen einem Azimutwinkel, der in den zweiten Positionsinformationen umfasst ist, und einem Azimutwinkel, der in den ersten Positionsinformationen umfasst ist, kleiner ist als eine Differenz zwischen einem Azimutwinkel, der in einer beliebigen Positionsinformation, die anders als die zweiten Positionsinformationen ist, unter der Vielzahl von Positionsinformationen umfasst ist, und dem Azimutwinkel, der in den ersten Positionsinformationen umfasst ist, eine Differenz zwischen einem Vertikalwinkel, der in den zweiten Positionsinformationen umfasst ist, und einem Vertikalwinkel, der in den ersten Positionsinformationen umfasst ist, kleiner ist als eine Differenz zwischen einem Vertikalwinkel, der in einer beliebigen Positionsinformation, die anders als die zweiten Positionsinformationen ist, unter der Vielzahl von Positionsinformationen umfasst ist, und dem Vertikalwinkel, der in den ersten Positionsinformationen umfasst ist; und

Bestimmen gemäß den ersten Positionsinformationen und den zweiten Positionsinformationen (303), dass der Zieldatenpunkt ein Anomaliepunkt oder ein Normalpunkt ist, wobei ein Anomaliepunkt ein Punkt in den LiDAR-Punktwolkendaten ist, der durch einen Angreifer manipuliert oder eingefügt wurde.

2. Verfahren nach Anspruch 1, wobei das Bestimmen gemäß den ersten Positionsinformationen und den zweiten Positionsinformationen, dass der Zieldatenpunkt ein Anomaliepunkt oder ein Normalpunkt ist, Folgendes umfasst:

Bestimmen eines Anomaliewertes gemäß den ersten Positionsinformationen und den zweiten Positionsinformationen;
Bestimmen gemäß dem Anomaliewert, dass der Zieldatenpunkt der Anomaliepunkt oder der Normalpunkt ist.

3. Verfahren nach Anspruch 2, wobei das Bestimmen eines Anomaliewertes gemäß den ersten Positionsinformationen und den zweiten Positionsinformationen Folgendes umfasst:

Bestimmen des Anomaliewertes gemäß der folgenden Formel:

$$S_{anom} = |\alpha - \alpha_{nahe}| + |\omega - \omega_{nahe}|$$

$S_{anom}$ ist der Anomaliewert, $\alpha$ ist der Azimutwinkel, der in den ersten Positionsinformationen umfasst ist, $\alpha_{nahe}$ ist der Azimutwinkel, der in den zweiten Positionsinformationen umfasst ist, $\omega$ ist der Vertikalwinkel, der in den ersten Positionsinformationen umfasst ist, und $\alpha_{nahe}$ ist der Vertikalwinkel, der in den zweiten Positionsinformationen umfasst ist.

4. Verfahren nach Anspruch 2, wobei das Bestimmen eines Anomaliewertes gemäß den ersten Positionsinformationen und den zweiten Positionsinformationen Folgendes umfasst:

Bestimmen des Anomaliewertes gemäß der folgenden Formel:

$$S_{anom} = \left|\frac{\alpha}{\alpha_{nahe}}\right| + \left|\frac{\omega}{\omega_{nahe}}\right|$$

$S_{anom}$ ist der Anomaliewert, $\alpha$ ist der Azimutwinkel, der in den ersten Positionsinformationen umfasst ist, $\alpha_{nahe}$ ist der Azimutwinkel, der in den zweiten Positionsinformationen umfasst ist, $\omega$ ist der Vertikalwinkel, der in den ersten Positionsinformationen umfasst ist, und $\omega_{nahe}$ ist der Vertikalwinkel, der in den zweiten Positionsinformationen umfasst ist.

5. Verfahren nach Anspruch 2, wobei das Bestimmen eines Anomaliewertes gemäß den ersten Positionsinformationen und den zweiten Positionsinformationen Folgendes umfasst:

Bestimmen des Anomaliewertes gemäß der folgenden Formel:

$$S_{anom} = |\alpha - \alpha_{nahe}|$$

$S_{anom}$ ist der Anomaliewert, $\alpha$ ist der Azimutwinkel, der in den ersten Positionsinformationen umfasst ist, $\alpha_{nahe}$ ist der Azimutwinkel, der in den zweiten Positionsinformationen umfasst ist.

6. Verfahren nach einem der Ansprüche 2 bis 5, wobei das Bestimmen gemäß des Anomaliewertes, dass der Zieldatenpunkt der Anomaliepunkt oder der Normalpunkt ist, Folgendes umfasst:

   Bestimmen, dass der Zieldatenpunkt der Anomaliepunkt ist, wenn der Anomaliewert größer oder gleich einem voreingestellten Schwellenwert ist;
   Bestimmen, dass der Zieldatenpunkt der Normalpunkt ist, wenn der Anomaliewert kleiner als der voreingestellte Schwellenwert ist.

7. Elektronische Vorrichtung (400), wobei die elektronische Vorrichtung Folgendes umfasst:

   ein Erlangungsmodul (401), das zum Erlangen erster Positionsinformationen konfiguriert ist, wobei die ersten Positionsinformationen eine Position eines Zieldatenpunkts in LiDAR-Punktwolkendaten angeben, wobei das Erlangungsmodul spezifisch zum Bestimmen der ersten Positionsinformationen des Zieldatenpunkts gemäß einer Koordinate des Zieldatenpunkts in dem kartesischen Koordinatensystem konfiguriert ist, wobei die ersten Positionsinformationen einen Azimutwinkel des Zieldatenpunkts und einen Vertikalwinkel des Zieldatenpunkts umfassen;
   ein Bestimmungsmodul (402), das zum Bestimmen zweiter Positionsinformationen konfiguriert ist, die dem Zieldatenpunkt gemäß den Spezifikationen eines LiDAR-Sensors entsprechen, wobei die Spezifikationen des LiDAR-Sensors eine Horizontalwinkelauflösung, ein Aussendeintervall, eine Anzahl von Kanälen des LiDAR-Sensors, einen Vertikalwinkel für jeden Kanal und einen Horizontalwinkelversatz für jeden Kanal umfassen; wobei das Bestimmungsmodul ferner konfiguriert ist zum:

      Bestimmen einer Vielzahl von Positionsinformationen gemäß den Spezifikationen des LiDAR-Sensors, wobei jede Positionsinformation einem Datenpunkt entspricht und jede Positionsinformation einen Azimutwinkel eines entsprechenden Datenpunkts und einen Vertikalwinkel des entsprechenden Datenpunkts umfasst; wobei
      die Vielzahl von Positionsinformationen in einer Eins-zu-Eins-Entsprechung mit den möglichen Datenpunkten steht, die durch den LiDAR-Sensor gemessen werden können;
      Bestimmen von zweiten Positionsinformationen aus der Vielzahl von Positionsinformationen gemäß den ersten Positionsinformationen, wobei eine Differenz zwischen einem Azimutwinkel, der in den zweiten Positionsinformationen umfasst ist, und einem Azimutwinkel, der in den ersten Positionsinformationen umfasst ist, kleiner ist als eine Differenz zwischen einem Azimutwinkel, der in einer beliebigen Positionsinformation, die anders als die zweiten Positionsinformationen ist, unter der Vielzahl von Positionsinformationen umfasst ist, und dem Azimutwinkel, der in den ersten Positionsinformationen umfasst ist, eine Differenz zwischen einem Vertikalwinkel, der in den zweiten Positionsinformationen umfasst ist, und einem Vertikalwinkel, der in den ersten Positionsinformationen umfasst ist, kleiner ist als eine Differenz zwischen einem Vertikalwinkel, der in einer beliebigen Positionsinformation, die anders als die zweiten Positionsinformationen ist, unter der Vielzahl von Positionsinformationen umfasst ist, und dem Vertikalwinkel, der in den ersten Positionsinformationen umfasst ist;
      das Bestimmungsmodul ferner zum Bestimmen gemäß den ersten Positionsinformationen und den zweiten Positionsinformationen konfiguriert ist, dass der Zieldatenpunkt ein Anomaliepunkt oder ein Normalpunkt ist, wobei ein Anomaliepunkt ein Punkt in den LiDAR-Punktwolkendaten ist, der durch einen Angreifer manipuliert oder eingefügt wurde.

8. Elektronische Vorrichtung nach Anspruch 7, wobei das Bestimmungsmodul spezifisch konfiguriert ist zum:

   Bestimmen eines Anomaliewertes gemäß den ersten Positionsinformationen und den zweiten Positionsinformationen;
   Bestimmen gemäß dem Anomaliewert, dass der Zieldatenpunkt der Anomaliepunkt oder der Normalpunkt ist.

9. Elektronische Vorrichtung nach Anspruch 8, wobei das Bestimmungsmodul spezifisch zum Bestimmen des Anomaliewertes gemäß einer folgenden Formel konfiguriert ist:

$$S_{anom} = |\alpha - \alpha_{nahe}| + |\omega - \omega_{nahe}|$$

$S_{anom}$ ist der Anomaliewert, $\alpha$ ist der Azimutwinkel, der in den ersten Positionsinformationen umfasst ist, $\alpha_{nahe}$ ist der Azimutwinkel, der in den zweiten Positionsinformationen umfasst ist, $\omega$ ist der Vertikalwinkel, der in den ersten Positionsinformationen umfasst ist, und $\omega_{nahe}$ ist der Vertikalwinkel, der in den zweiten Positionsinformationen umfasst ist.

10. Elektronische Vorrichtung nach Anspruch 8, wobei das Bestimmungsmodul spezifisch zum Bestimmen des Anomaliewertes gemäß der folgenden Formel konfiguriert ist:

$$S_{anom} = \left|\frac{\alpha}{\alpha_{nahe}}\right| + \left|\frac{\omega}{\omega_{nahe}}\right|$$

$S_{anom}$ ist der Anomaliewert, $\alpha$ ist der Azimutwinkel, der in den ersten Positionsinformationen umfasst ist, $\alpha_{nahe}$ ist der Azimutwinkel, der in den zweiten Positionsinformationen umfasst ist, $\omega$ ist der Vertikalwinkel, der in den ersten Positionsinformationen umfasst ist, und $\omega_{nahe}$ ist der Vertikalwinkel, der in den zweiten Positionsinformationen umfasst ist.

11. Elektronische Vorrichtung nach Anspruch 8, wobei das Bestimmungsmodul spezifisch zum Bestimmen des Anomaliewertes gemäß der folgenden Formel konfiguriert ist:

$$S_{anom} = |\alpha - \alpha_{nahe}|$$

$S_{anom}$ ist der Anomaliewert, $\alpha$ ist der Azimutwinkel, der in den ersten Positionsinformationen umfasst ist, $\alpha_{nahe}$ ist der Azimutwinkel, der in den zweiten Positionsinformationen umfasst ist.

12. Elektronische Vorrichtung nach einem der Ansprüche 7 bis 11, wobei das Bestimmungsmodul spezifisch konfiguriert ist zum:

Bestimmen, dass der Zieldatenpunkt der Anomaliepunkt ist, wenn der Anomaliewert größer oder gleich einem voreingestellten Schwellenwert ist;
Bestimmen, dass der Zieldatenpunkt der Normalpunkt ist, wenn der Anomaliewert kleiner als der voreingestellte Schwellenwert ist.

13. Computerlesbares Speichermedium, wobei das computerlesbare Speichermedium Anweisungen speichert, und, wenn die Anweisungen auf einer elektronischen Vorrichtung (400) nach Anspruch 7 ausgeführt werden, die elektronische Vorrichtung (400) in die Lage versetzt wird, das Verfahren nach einem der Ansprüche 1 bis 6 durchzuführen.

14. Computerprogrammprodukt, wobei, wenn das Computerprogrammprodukt auf einer elektronischen Vorrichtung (400) nach Anspruch 7 ausgeführt wird, die elektronische Vorrichtung (400) in die Lage versetzt wird, das Verfahren nach einem der Ansprüche 1 bis 6 durchzuführen.

**Revendications**

1. Procédé de détection d'anomalies de données de nuage de points LiDAR, le procédé comprenant :
l'obtention de premières informations de position (301), dans lequel les premières informations de position indiquent une position d'un point de données cible dans les données de nuage de points LiDAR, dans lequel l'obtention de premières informations de position comprend :

la détermination des premières informations de position du point de données cible selon une coordonnée du point de données cible dans le système de coordonnées cartésiennes, dans lequel les premières informations de position comprennent un angle d'azimut du point de données cible et un angle vertical du point de données cible ;
la détermination de secondes informations de position correspondant au point de données cible, selon les spécifications d'un capteur LiDAR (302), dans lequel les spécifications du capteur LiDAR comprennent : une résolution angulaire horizontale, un intervalle de tir, un nombre de canaux du capteur LiDAR, un angle vertical pour chaque canal et un décalage angulaire horizontal pour chaque canal, et la détermination de secondes informations de position correspondant au point de données cible selon les spécifications d'un capteur LiDAR, comprend :

la détermination d'une pluralité d'informations de position selon les spécifications du capteur LiDAR, dans lequel chaque information de position correspond à un point de données et chaque information de position comprend un angle d'azimut d'un point de données correspondant et un angle vertical du point de données correspondant ; dans lequel

la pluralité d'informations de position sont en correspondance biunivoque avec les points de données possibles qui peuvent être mesurés par le capteur LiDAR ;

la détermination des secondes informations de position à partir de la pluralité d'informations de position, selon les premières informations de position, dans lequel une différence entre un angle d'azimut compris dans les secondes informations de position et un angle d'azimut compris dans les premières informations de position est inférieure à une différence entre un angle d'azimut compris dans une quelconque autre information de position autre que les secondes informations de position parmi la pluralité d'informations de position et l'angle d'azimut compris dans les premières informations de position, une différence entre un angle vertical compris dans les secondes informations de position et un angle vertical compris dans les premières informations de position est inférieure à une différence entre un angle vertical compris dans une quelconque autre information autre que les secondes informations de position parmi la pluralité d'informations de position et l'angle vertical compris dans les premières informations de position ; et

la détermination que le point de données cible est un point d'anomalie ou un point normal selon les premières informations de position et les secondes informations de position (303), dans lequel un point d'anomalie est un point dans les données du nuage de points LiDAR qui a été falsifié ou injecté par un attaquant.

2. Procédé selon la revendication 1, dans lequel la détermination que le point de données cible est un point d'anomalie ou point normal selon les premières informations de position et les secondes informations de position, comprend :

la détermination d'un score d'anomalie selon les premières informations de position et les secondes informations de position ;

la détermination que le point de données cible est le point d'anomalie ou le point normal selon le score d'anomalie.

3. Procédé selon la revendication 2, dans lequel la détermination d'un score d'anomalie selon les premières informations de position et les secondes informations de position, comprend :

la détermination du score d'anomalie selon la formule suivante :

$$S_{anom} = |\alpha - \alpha_{proche}| + |\omega - \omega_{proche}|$$

$S_{anom}$ est le score d'anomalie, $\alpha$ est l'angle d'azimut compris dans les premières informations de position, $\alpha_{proche}$ est l'angle d'azimut compris dans les secondes informations de position, $\omega$ est l'angle vertical compris dans les premières informations de position et $\omega_{proche}$ est l'angle vertical compris dans les secondes informations de position.

4. Procédé selon la revendication 2, dans lequel la détermination d'un score d'anomalie selon les premières informations de position et les secondes informations de position, comprend :

la détermination du score d'anomalie selon la formule suivante :

$$S_{anom} = \left| \frac{\alpha}{\alpha_{proche}} \right| + \left| \frac{\omega}{\omega_{proche}} \right|$$

$S_{anom}$ est le score d'anomalie, $\alpha$ est l'angle d'azimut compris dans les premières informations de position, $\alpha_{proche}$ est l'angle d'azimut compris dans les secondes informations de position, $\omega$ est l'angle vertical compris dans les premières informations de position et $\omega_{proche}$ est l'angle vertical compris dans les secondes informations de position.

5. Procédé selon la revendication 2, dans lequel la détermination d'un score d'anomalie selon les premières informations de position et les secondes informations de position, comprend :

la détermination du score d'anomalie selon la formule suivante :

$$S_{anom} = |\alpha - \alpha_{proche}|$$

$S_{anom}$ est le score d'anomalie, $\alpha$ est l'angle d'azimut inclus dans les premières informations de position, $\alpha_{proche}$ est l'angle d'azimut inclus dans les secondes informations de position.

6. Procédé selon l'une quelconque des revendications 2 à 5, dans lequel la détermination que le point de données cible est le point d'anomalie ou le point normal selon le score d'anomalie, comprend :

la détermination que le point de données cible correspond au point d'anomalie lorsque le score d'anomalie est supérieur ou égal à un seuil prédéfini ;
la détermination que le point de données cible est le point normal lorsque le score d'anomalie est inférieur au seuil prédéfini.

7. Dispositif électronique (400), le dispositif électronique comprenant :

un module d'obtention (401), configuré pour obtenir des premières informations de position, dans lequel les premières informations de position indiquent la position d'un point de données cible dans les données de nuage de points LiDAR, dans lequel le module d'obtention est spécifiquement configuré pour déterminer les premières informations de position du point de données cible selon une coordonnée du point de données cible dans le système de coordonnées cartésiennes, dans lequel les premières informations de position comprenant un angle d'azimut du point de données cible et un angle vertical du point de données cible ;
un module de détermination (402), configuré pour déterminer des secondes informations de position correspondant au point de données cible selon les spécifications d'un capteur LiDAR, dans lequel les spécifications du capteur LiDAR comprennent une résolution angulaire horizontale, un intervalle de tir, le nombre de canaux du capteur LiDAR, un angle vertical pour chaque canal et un décalage d'angle horizontal pour chaque canal ; le module de détermination est également configuré pour :

déterminer une pluralité d'informations de position selon les spécifications du capteur LiDAR, dans lequel chaque information de position correspond à un point de données et chaque information de position comprend un angle d'azimut d'un point de données correspondant et un angle vertical du point de données correspondant ; dans lequel
la pluralité d'informations de position sont en correspondance biunivoque avec les points de données possibles qui peuvent être mesurés par le capteur LiDAR ;
déterminer les secondes informations de position à partir de la pluralité d'informations de position selon les premières informations de position, dans lequel une différence entre un angle d'azimut compris dans les secondes informations de position et un angle d'azimut compris dans les premières informations de position est inférieure à une différence entre un angle d'azimut compris dans une quelconque autre information de position autre que les secondes informations de position parmi la pluralité d'informations de position et l'angle d'azimut compris dans les premières informations de position, une différence entre un angle vertical compris dans les secondes informations de position et un angle vertical compris dans les premières informations de position est inférieure à une différence entre un angle vertical compris dans une quelconque autre information autre que les secondes informations de position parmi la pluralité d'informations de position et l'angle vertical compris dans les premières informations de position ;
le module de détermination est également configuré pour déterminer que le point de données cible est un point d'anomalie ou un point normal selon les premières informations de position et les secondes informations de position, dans lequel un point d'anomalie est un point dans les données de nuage de points LiDAR qui a été falsifié ou injecté par un attaquant.

8. Dispositif électronique selon la revendication 7, dans lequel le module de détermination est spécifiquement configuré pour :

déterminer un score d'anomalie selon les premières informations de position et les secondes informations de position ;

déterminer que le point de données cible est le point d'anomalie ou le point normal selon le score d'anomalie.

9. Dispositif électronique selon la revendication 8, dans lequel le module de détermination est spécifiquement configuré pour déterminer le score d'anomalie selon la formule suivante :

$$S_{anom} = |\alpha - \alpha_{proche}| + |\omega - \omega_{proche}|$$

$S_{anom}$ est le score d'anomalie, $\alpha$ est l'angle d'azimut compris dans les premières informations de position, $\alpha_{proche}$ est l'angle d'azimut compris dans les secondes informations de position, $\omega$ est l'angle vertical compris dans les premières informations de position et $\omega_{proche}$ est l'angle vertical compris dans les secondes informations de position.

10. Dispositif électronique selon la revendication 8, dans lequel le module de détermination est spécifiquement configuré pour déterminer le score d'anomalie selon la formule suivante :

$$S_{anom} = \left|\frac{\alpha}{\alpha_{proche}}\right| + \left|\frac{\omega}{\omega_{proche}}\right|$$

$S_{anom}$ est le score d'anomalie, $\alpha$ est l'angle d'azimut compris dans les premières informations de position, $\alpha_{proche}$ est l'angle d'azimut compris dans les secondes informations de position, $\omega$ est l'angle vertical compris dans les premières informations de position et $\omega_{proche}$ est l'angle vertical compris dans les secondes informations de position.

11. Dispositif électronique selon la revendication 8, dans lequel le module de détermination est spécifiquement configuré pour déterminer le score d'anomalie selon la formule suivante :

$$S_{anom} = |\alpha - \alpha_{proche}|$$

$S_{anom}$ est le score d'anomalie, $\alpha$ est l'angle d'azimut inclus dans les premières informations de position, $\alpha_{proche}$ est l'angle d'azimut inclus dans les secondes informations de position.

12. Dispositif électronique selon l'une quelconque des revendications 7 à 11, dans lequel le module de détermination est spécifiquement configuré pour :

déterminer que le point de données cible correspond au point d'anomalie lorsque le score d'anomalie est supérieur ou égal à un seuil prédéfini ;
déterminer que le point de données cible est le point normal lorsque le score d'anomalie est inférieur au seuil prédéfini.

13. Support de stockage lisible par ordinateur, dans lequel le support de stockage lisible par ordinateur stocke des instructions, et lorsque les instructions s'exécutent sur un dispositif électronique (400) selon la revendication 7, le dispositif électronique (400) est activé pour réaliser le procédé selon l'une quelconque des revendications 1 à 6.

14. Produit de programme informatique, dans lequel, lorsque le produit de programme informatique s'exécute sur un dispositif électronique (400) selon la revendication 7, le dispositif électronique (400) est activé pour réaliser le procédé selon l'une quelconque des revendications 1 à 6.

LiDAR scanning
system 100

LiDAR sensor
101

Preprocessing
module
102

Perception
module 103

FIG. 1

LiDAR scanning
system 200

LiDAR sensor
201

Preprocessing
module
202

Detection
module
204

Perception
module 103

FIG. 2

```
┌─────────────────────────────────────────┐  ⌐301
│      obtaining a first position information │
└─────────────────────────────────────────┘
                      │
┌─────────────────────────────────────────┐  ⌐302
│   determining a second position information │
│      corresponding to the target data point │
│   according specifications of a LiDAR's sensor │
└─────────────────────────────────────────┘
                      │
┌─────────────────────────────────────────┐  ⌐303
│        determining the target data point is an │
│   anomaly point or a normal point according to │
│   the first position information and the second │
│                position information │
└─────────────────────────────────────────┘
```

FIG. 3

```
┌───────────────────────────────────────┐
│          Electronic device             │
│                400                     │
│   ┌─────────────────────────────┐      │
│   │      Obtaining module        │      │
│   │           401                │      │
│   └─────────────────────────────┘      │
│                  │                     │
│   ┌─────────────────────────────┐      │
│   │     Determining module       │      │
│   │           402                │      │
│   └─────────────────────────────┘      │
└───────────────────────────────────────┘
```

FIG. 4

Electronic device
500

Transceiver
501

Memory
503

Processor
502

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021088313 A1